(19) Europäisches Patentamt
European Patent Office
Office européen des brevets

(11) **EP 2 388 892 A1**

(12) **EUROPEAN PATENT APPLICATION**

(43) Date of publication:
**23.11.2011 Bulletin 2011/47**

(51) Int Cl.:
*H02K 3/14* (2006.01)   *H02K 3/28* (2006.01)
*H02K 3/34* (2006.01)   *H02K 7/18* (2006.01)
*H02K 3/40* (2006.01)

(21) Application number: **10163314.7**

(22) Date of filing: **19.05.2010**

(84) Designated Contracting States:
**AL AT BE BG CH CY CZ DE DK EE ES FI FR GB GR HR HU IE IS IT LI LT LU LV MC MK MT NL NO PL PT RO SE SI SK SM TR**
Designated Extension States:
**BA ME RS**

(71) Applicant: **Siemens Aktiengesellschaft**
**80333 München (DE)**

(72) Inventors:
• **Groendahl, Erik**
  **8653, Them (DK)**
• **Kimiabeigi, Mohammad**
  **7330, Brande (DK)**
• **Stiesdal, Henrik**
  **5000, Odense C (DK)**

(54) **Generator with single turn wave winding, wind turbine and method for determining the thickness of the slot insulation of a generator**

(57)     A generator (76) comprising at least one pole set representing one phase (1, 2, 3) is disclosed. Each pole set comprises a number of poles (4), a number of slots (19) and a number of stator teeth. Each phase is insulated from neighbouring teeth by means of a slot insulation. A number of conductors (8) are assembled such that each conductor (8) is turned about the poles (4) of a particular pole set such that only half a single turn (8a, 8b, 8c, 8d) is associated to each pole (4a, 4b, 4c, 4d). Each pole (4) comprises a slot insulation (61, 62, 63, 64) between the pole (4) and the associated conductors (8). The slot insulation (61, 62, 63, 64) has a different thickness for at least two different poles (4) of the same pole set.

FIG 6

EP 2 388 892 A1

**Description**

The present invention relates to a generator and to a wind turbine. It further relates to a method for determining the thickness of the slot insulation of a generator.

Based on today's technology in direct drive generators, each coil is composed of more than one series turn while a chosen number of coils may also be connected in series. The two aforementioned selectable numbers, i.e. the number of series in turn and the number of coils connected in series, may be chosen to obtain the terminal voltage of the generator which itself may have already been chosen based on power electronics/grid requirements. In the described conventional type of winding, the series turns in each slot need to be electrically insulated from each other due to the voltage difference between the turns in series.

The aforementioned type of insulation used in the slot of the machines with conventional windings, results in different disadvantages: Poor heat transfer coefficient of the insulation makes it very difficult for the main source of heat in the generator, i.e. the windings, to get cooled down through the neighbouring laminations. Using the required insulation in the slots decreases the slot space for the active material, which is usually copper, and thereby the so called fill factor. This in turn reduces the out put torque for the same current density or decreases the efficiency for the same torque. A typical value of fill factor for conventional type of winding is in the range of 70-80%.

The voltage difference between the lamination and turns is different for different turns according to their distance/order from the converter terminal. However, since more than one turn is placed in the slot, the slot insulation is designed with a uniform thickness and based on the worst case i.e. to withstand the largest voltage difference. This procedure makes the insulation volume larger than what is theoretically required.

Therefore, it is a first objective of the present invention to provide a generator with an increased fill factor. It is a second objective of the present invention to provide an advantageous wind turbine. Moreover, it is a third objective of the present invention to provide a method for determining the thickness of the insulation between poles and conductors of a generator.

The first objective is solved by a generator as claimed in claim 1. The second objective is solved by a wind turbine as claimed in claim 10. The third objective is solved by a method for determining the thickness of the insulation between poles and conductors of a generator as claimed in claim 11. The depending claims define further developments of the present invention.

The inventive generator comprises at least one pole set representing one phase. Each pole set comprises a number of poles. Each pole comprises a number of slots and a number of stator teeth. Each phase is insulated from neighbouring teeth by means of a slot insulation. A number of conductors are assembled such that each conductor is turned about the poles of a particular pole set such that only half a single turn is associated to each pole. Each pole comprises a slot insulation between the pole and the associated conductors. The slot insulation has a different thickness for at least two different poles of the same pole set.

Preferably, a number of conductors which are connected in parallel are turned about the poles such that only half a single turn of each conductor is associated to each pole.

Since the voltage difference between parallel conductors would be very small, the insulation between parallel conductors would be smaller than conventional series conductors.

Furthermore, the slot insulation between a particular pole and the associated conductors can be optimized for the particular pole. Each pole may comprise a lamination, for example part of the stator lamination of a generator. Compared with a conventional generator, the so called slot insulation which is used between the slot or the conductors in the slot and the stator lamination or pole is reduced. Generally, in the inventive generator the slot fill factor is increased. This results in higher torque or efficiency. Furthermore, in case of a permanent magnet generator which may be used in a direct drive wind turbine application the inventive generator provides the possibility for a better cooling of the permanent magnet generator.

In the inventive generator single turn wave winding replaces the conventional windings. The idea is that each phase in, for example, a three phase or multi phase generator has a single Go or Return path in each pole. In the frame work of the present invention a single Go or Return path is also designated as half a single turn. The Go and Return paths or half a single turns may form a wave configuration. For example, a single Go path may itself be composed of a number of parallel conductors. The parallel conductors return in the next pole and continue this way of distribution along the hole circumference of, for example, the stator of the generator. This gives the advantage of having less insulation in the slot. Thereby, a better cooling of the windings can be achieved and a higher slot fill factor can be realised.

Advantageously, between 5 and 25, preferably between 10 and 20, conductors may be connected in parallel. Assuming that the same slot dimension as for conventional multi-turn windings is used for the wave winding, 10 to 20 parallel conductors or in that range will form the winding in order to reduce the proximity and skin effect losses. The optimal number of parallel conductors to give a low value of proximity and skin effect loss can be chosen analytically or can be obtained by a simulation or can be obtained experimentally.

The conductors can be transposed from one pole to another pole. This improves the elimination of extra AC losses, for example losses due to the proximity and skin effect. The conductors can be partially or fully transposed in each or every second and winding. Advantageously, the conductors may be transposed at every neighbouring pole or at every second neighbouring pole of the particular pole set. Preferably, the number of poles in a pole set may be an integer multiple of the number of the conductors connected in parallel. To have completely balance out the extra AC loss a full transposition may be used, i.e. to transpose every parallel conductor at every pole while choosing the number of poles to be in integer multiple of the number of parallel conductors. Having a different number of poles than what is mentioned will still be an option, but with some extent higher relative AC loss due to proximity effect.

Generally, the generator may comprise a stator and a rotor. The stator may comprise the at least one pole set. Alternatively or additionally the rotor may comprise the at least one pole set.

In the proposed type of single turn winding, the number of poles may be equal to the sum of Go and Return paths of each phase winding. This means, that the number of poles may be equal to the sum of the half a single turns.

The inventive assembly of the conductors such that each conductor is turned about the poles of a particular pole set such that only half a single turn is associated to each pole means that there is only one Go or Return path of each conductor in each slot. If a number of conductors are connected and arranged in parallel, then there is one Go or Return conductor set in each slot. This means that the voltage difference between the laminations and the neighboring slot is almost uniform along the slot height. Thereby, the required thickness of the slot insulation may be chosen optimally for each slot based on the voltage difference related specifically to the conductors set in that slot. This procedure results in having a different slot insulation thickness for different slots arranging from maximum to minimum.

The thickness of the slot insulation between can depend on the assembly of the conductors in the particular slot. The thickness of the slot insulation between can also depend on the voltage difference between the particular pole and the associated conductors.

Each pole may comprise a lamination. The thickness of the slot insulation can advantageously depend on the voltage difference between the particular lamination and the associated conductors. For instance, the generator may comprise a neutral conductor which may be grounded. The neutral conductor may have the same voltage as the pole. Advantageously, the slot insulation may follow an arithmetic sequence in the different poles of each pole set from a maximum value $Ins_{max}$ to a minimum value $Ins_{min}$.

For example, the difference a of the slot insulation thickness between neighboring poles of a particular pole set can be proportional to the voltage $V_{half \cdot a \cdot turn}$ in each half a single turn associated to the particular pole. Preferably, the difference a of the slot insulation thickness between neighboring poles of a particular pole set

can be $\alpha = \dfrac{Ins_{max} - Ins_{min}}{N_{half.a.turn} - 1}$, or can be chosen based on this formula.

$N_{half.a.turn}$ is the total number of the half a single turns of each conductor.

Advantageously, the total number of half a single turns $N_{half.a.turn}$ of each conductor can be equal the number of poles in the particular pole set. Generally, the generator may comprise an even number of poles per pole set. In a preferred embodiment of the invention such as for a generator for a direct drive wind turbine the number of poles is equal to or above 100. The generator may comprise at least 3 pole sets, representing three phases. For instance, the generator may be a direct drive generator.

The thickness $Ins_n$ of the slot insulation between the $n^{th}$ pole and the slot can be $Ins_n = Ins_{min} + (n-1)^* \alpha$, or can be chosen based on this formula. $Ins_n$ corresponds to the $n^{th}$ Go or Return path of each phase winding. The total thickness of the slot insulation which follows the arithmetic sequence of $Ins_n = Ins_{min} + (n-1)^* \alpha$ can be shown is equal to

$$\sum_1^{N_{half.a.turn}} Ins_n = \frac{N_{half.a.turn}}{2} . Ins_{max}$$

for one phase winding. Comparing this to multi-turn conventional windings, the slot insulation in multi-turn conventional windings is equal to $Ins_{max}$ for all the slots, giving the total insulation thickness of $N_{half.a.turn}^* Ins_{max}$. This means, that the relative reduction of the total slot insulation using the previously described single turn winding and insulation pattern can be calculated equal to 50%.

Of Course, in real application the neutral point may not be grounded and the voltage difference between the slot and lamination does not linearly vary between the slots. Thus, one need to calculate the right values or function of voltage difference for different slots and based on these values the required insulation thickness can be chosen for each slot. The reduction of insulation would then be lower than in the described example, but yet significant.

The inventive wind turbine comprises a generator as previously described. The inventive wind turbine has the same advantages as the inventive generator.

The inventive method for determining the thickness of the insulation between poles and slots of a generator is related to a generator which comprises at least one pole set representing one phase. Each pole set comprises a number of poles. The poles are separated by slots. A number of conductors are assembled such that each conductor is turned about the poles of a particular pole set such that only half a single turn is associated to each pole. Each pole comprises a slot insulation between the pole and the associated conductor. The thickness of the slot insulation is determined depending on the voltage in the conductors in the particular slot. Generally, the inventive method for determining the thickness of the slot insulation can be related to an inventive generator as previously described.

Advantageously, a maximum slot insulation thickness $Ins_{max}$ and a minimum slot insulation thickness $Ins_{min}$ may be determined for each pole set. Moreover, a linear proportion for calculating the difference in the thickness of the slot insulation between the neighbouring poles of the same pole set can be determined. The linear proportion can be calculated or can experimentally obtained or can be simulated. For example, the linear proportion a can be calculated by $\alpha = \dfrac{Ins_{max} - Ins_{min}}{N_{half.a.turn} - 1}$, where $N_{half.a.turn}$ is the total number of half a single turns of each conductor. Furthermore, the thickness $Ins_n$ of the slot insulation between the $n^{th}$ pole and the associated conductors can be calculated by $Ins_n = Ins_{min} + (n-1) * \alpha$, wherein $\alpha$ is the difference of the slot insulation thickness between neighbouring poles of a particular pole set. n is an natural number and $Ins_{min}$ is a minimum slot insulation thickness value.

The inventive method has the advantage, that it provides the possibility to choose the slot insulation thickness optimal for each slot. This eliminates unnecessary volumes of a slot insulation and thereby increases the fill factor and enhances the cooling. Furthermore, using the described single turn wave-like winding the manufacturing of the coils and the winding process becomes significantly easier and less costly than for conventional multi-turn windings.

Further features, properties and advantages of the present invention will become clear from the following description of an embodiment in conjunction with the accompanying drawings. All mentioned features and properties are advantageous alone or in any combination with each other.

Figure 1    schematically shows a wind turbine.

Figure 2    schematically shows a comparative illustration of multi-turn and single turn wave windings for one phase and four poles.

Figure 3    schematically shows part of a single turn wave windings of the lower part of figure 3 in a perspective view.

Figure 4    schematically shows the AC loss factor dependency for single turn winding of the number of parallel, fully transposed conductors.

Figure 5    schematically shows an arrangement of fully transposed 5 parallel conductors belonging to one phase.

Figure 6    schematically shows part of a stator of a generator.

Figure 7    schematically shows the insulation between parallel conductors associated to a pole.

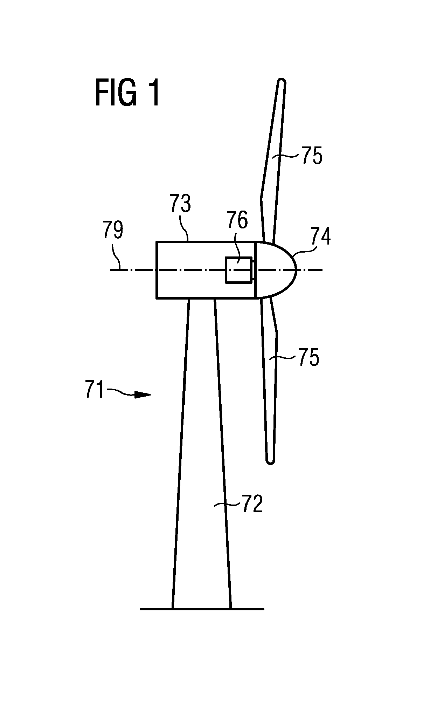

An embodiment of the present invention will now be described with reference to Figures 1 to 7.

Figure 1 schematically shows a wind turbine 71. The wind turbine 71 comprises a tower 72, a nacelle 73 and a hub 74. The nacelle 73 is located on top of the tower 72. The hub 74 comprises a number of wind turbine blades 75. The hub 74 is mounted to the nacelle 73. Moreover, the hub 74 is pivot-mounted such that it is able to rotate about a rotation axis 79. A generator 76 is located inside the nacelle 73. The wind turbine 71 is a direct drive wind turbine.

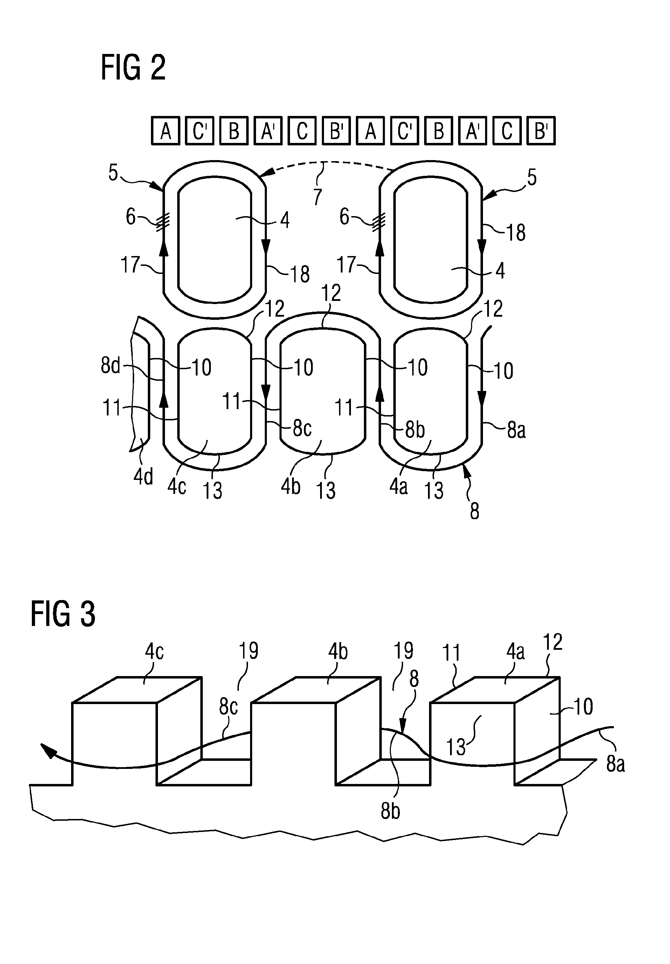

Figure 2 schematically shows a comparative illustration of multi-turn and single turn wave windings for one phase and four poles. The upper part of Figure 2 shows the distributed winding with slots per pole and phase equal to 1 for a 3-phase machine, phases A, B and C. A, B and C correspond to Go direction of the phases and A', B' and C' correspond to Return direction, i.e. opposite direction, of the phases.

In the middle part of Figure 2 two poles 4 representing the first phase are shown. Each of the poles 4 comprises a number of conductor windings 5 with multiple-turns per pole 4. The strokes 6 indicate the more than one series turns. The conductors 5 are connected in series. This is indicated by the dashed line 7. Due to the series turns each of the poles 4 or coils comprises a number of Go paths 17 and a number of Return paths 18.

The lower part of Figure 2 schematically shows the inventive single turn wave windings for one phase of an inventive generator. The pole set belonging to the first phase A comprises a number of poles 4, from which four poles 4a, 4b, 4c and 4d are shown. Generally, the poles 4 may comprise a lamination.

Each pole 4 comprises a right side 10, a left side 11, a front side 12 and a back side 13. A conductor 8 is wave-like turned about the poles 4. The conductor 8 comprises a first half turn 8a, a second half turn 8b, a third half turn 8c and a fourth half turn 8d. The first half turn 8a represents a Return path A', the second half turn 8b represents a Go path A, the third half turn 8c represents a Return path A' and the fourth half turn 8d represents a Go path A.

The first half turn 8a proceeds along the right side 10 of the first pole 4a and proceeds further along the back side 13 of the first pole 4a. Then it proceeds further along the left side 11 of the first pole 4a and at the same time along the right side 11 of the second pole 4b. This means, that the conductor passes a slot between the first pole 4a and the second pole 4b. Then the conductor 8 further proceeds along the front side 11 of the second pole 4b, then along the left side 11 of the second pole 4b and at the same time along the right side 10 of the third pole 4c. The conductor 8 further proceeds along the back side 13 of the third pole 4c and along the left side of the third pole 4c and at the same time along the right side 10 of the fourth pole 4d.

In this wave-like configuration the first half a turn 8a is associated to the first pole 4a, the second half a turn 8b is associated to the second pole 4b, the third half a turn 8c is associated to the third pole 4c and the fourth half a turn 8d is associated to the fourth pole 4d. Figure 3 schematically shows part of the single turn wave windings of the lower part of Figure 2 in a perspective view. The poles 4 are separated from each other by slots 19.

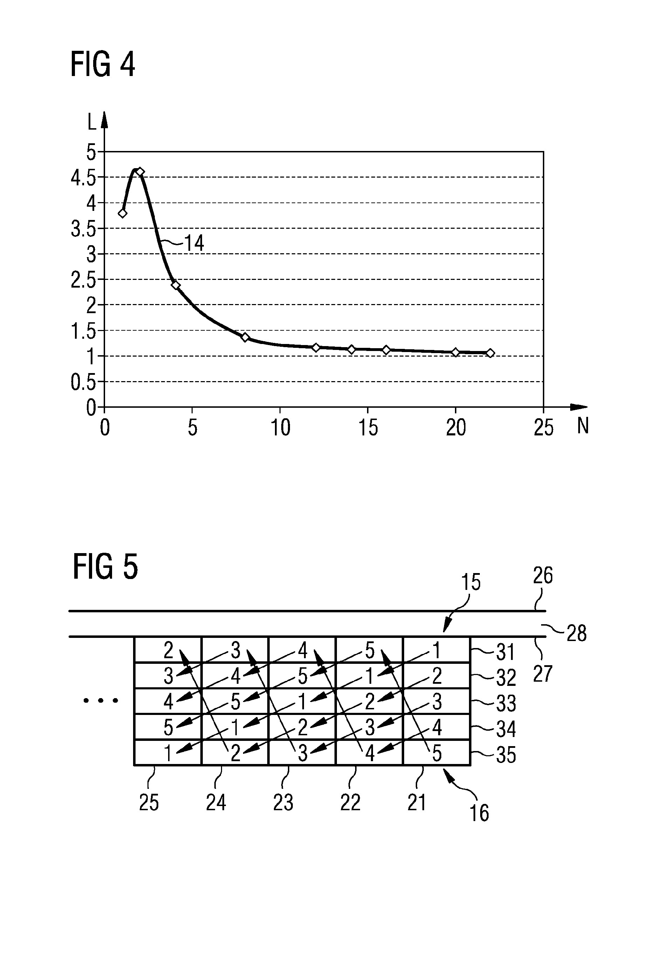

A number of conductors 8 are connected in parallel and are turned about the poles in such a way that only half a single turn of each conductor is associated to each pole, as shown in the lower part in Figure 2 and in Figure 3. The optimal number of parallel conductors to give a low value of proximity and skin effect loss can be chosen analytically or experimentally or by simulation. An example is shown in Figure 4.

Figure 4 schematically shows the AC loss factor for single turn windings versus the number of parallel conductors which are always assumed to be fully transposed. The x-axis represents the number N of parallel and fully transposed conductors. The y-axis represents the AC loss factor L for a single turn winding in arbitrary units. The AC loss factor is caused by proximity and skin effect losses. The obtained curved 14 in Figure 4 shows a maximum AC loss factor for about two parallel conductors. With a further increasing number of parallel conductors the AC loss factor decreases nearly exponentially. For eight and more parallel conductors the AC loss factor L decreases only minimally. The curve 14 shows for ten and more parallel conductors a nearly straight line which is nearly parallel to the x-axis. This means, that the optimal number of parallel conductors to give a low value of proximity and skin effect loss is ten and more.

Figure 5 schematically shows an arrangement of fully transposed 5 parallel conductors belonging to one phase. In the shown arrangement the first pole 21 is followed by a second pole 22, followed by a third pole 23, followed by a fourth pole 24, which is followed by a fifth pole 25 and so forth. Each of the poles 21, 22, 23, 24 and 25 comprises an upper side 15 and a bottom side 16. The different conductors are designated by numbers 1 to 5. Each pole 21, 22, 23, 24 and 25 comprises five positions, a first position 31, a second position 32, a third position 33, a fourth position 34 and a fifth position 35, which follow each other from the upper side 15 to the bottom side 16.

In the first pole 21 the first conductor 1 is located at the first position 31, the second conductor 2 is located at the second position 32, the third conductor 3 is located at the third position 33, the fourth conductor 4 is located at the forth position 34 and the fifth conductor 5 is located at the fifth position 35.

In the second pole 22 the next half a turn of the first conductor 1 changes to the second position 32, the next half a turn of the second conductor 2 changes to the third position, the next half a turn of the third conductor 3 changes to the fourth position 34 and the next half a turn of the fourth conductor 4 changes to the fifth position 35. The next half a turn of the fifth conductor 5 changes from the fifth position 35 in the first pole 21 to the first position 31 in the second pole 22. This pattern is continued for the next poles as shown in Figure 5. By arranging the conductors as shown in Figure 5 the 5 parallel conductors are completely transposed.

In the present embodiment the generator comprises three phases, which means that it comprises three pole sets. Each pole set comprises ten poles. The pattern which is shown in Figure 5 is cyclically repeated for the other 5 poles which are not shown in Figure 5. Generally, the generator comprises a rotor 26, a stator 27 and an airgap 28 between the rotor 26 and the stator 27. The stator 27 comprises the poles shown in Figure 5. Alternatively, the rotor 26 may comprise the poles shown in Figure 5.

Based on the described transposed single turn wave winding configuration, it is theoretically clear that the parallel conductors in the slot may need no insulation or only some varnish as there is none or very small voltage difference between these parallel conductors.

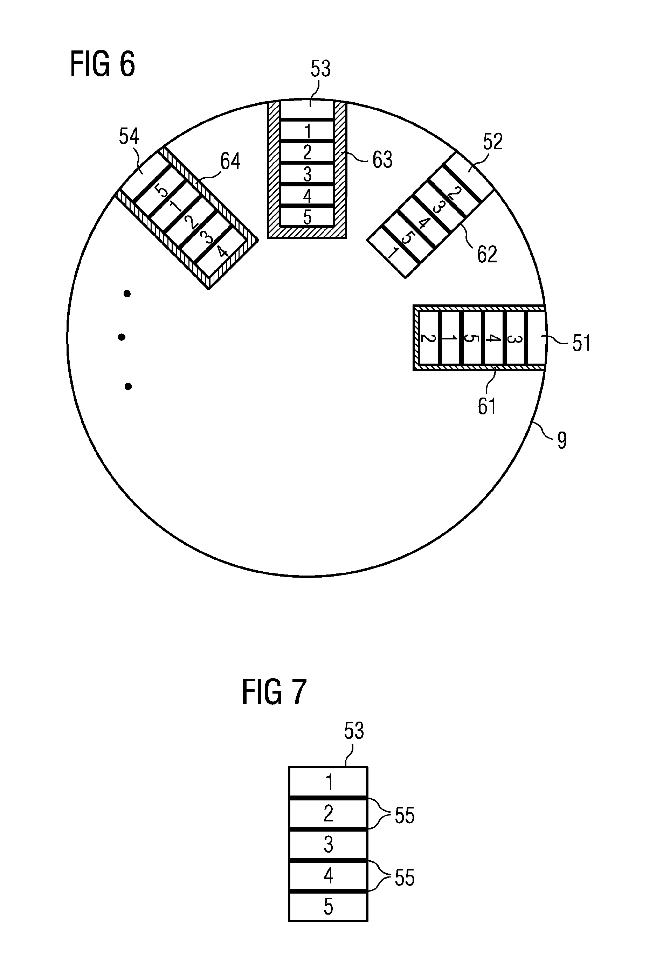

Figure 6 schematically shows part of a stator 9 of a generator 76. Figure 6 symbolically illustrates the slot insulation in an optimal arrangement for a 10 pole generator. Only part of one phase is shown. The scaling of the blank space for the slots of the other two phases is not respected. Four poles 51, 52, 53 and 54 of one pole set representing one phase are shown. The parallel conductors in the poles are numbered from 1 to 5 and are arranged in a pattern as described with reference to Figure 5.

The pole 51 comprises a slot insulation 61. The slot insulation 61 has a thickness which corresponds to $Ins_{min} + \alpha$. $\alpha$ is proportional to the voltage $V_{half.a.turn}$ in each half a single turn associated to the first pole 51.

The second pole 52, which is the neighbouring pole to the first pole 51 in the shown pole set, comprises a slot insulation 62 with none or minimum thickness. The third pole 53, which is the neighbouring pole to the second pole 52 in the shown pole set, comprises a slot insulation 63 with a maximum thickness $Ins_{max}$. The fourth pole 54, which is the neighbouring pole to the third pole 53, comprises a slot insulation 64 with a thickness of $Ins_{max} - \alpha$.

The decremental step in the slot insulation thickness, the common difference in the arithmetic sequence, shown as $\alpha$ in Figure 1, is proportional to the voltage $V_{half.a.turn}$ in each Go or Return path of the winding. Assuming a linear proportion, $\alpha$ may be equal to or

chosen based on $\alpha = \dfrac{Ins_{\max} - Ins_{\min}}{N_{half.a.turn} - 1}$ . $N_{half.a.turn}$ is the total number of Go and Return paths of each phase winding and may be equal to the number of poles in the particular pole set.

Furthermore, the aforementioned sequence of slot insulation may be described by $Ins_n = Ins_{\min} + (n-1)*\alpha$, where $Ins_n$ corresponds to the $n^{th}$ Go or Return path of each phase winding.

Figure 7 schematically shows as an example the insulation between the parallel conductors 55 of the third pole 53. The conductors are numbered from 1 to 5. They are connected in parallel, as previously described. Because of the connection in parallel and the parallel assembly none or only very thin conductor insulation 55 is necessary between the different conductors.

Generally, the generator 76 can comprise an inner stator, which means that the stator is located radially inside of the rotor of the generator related to the rotation axis 79 of the rotor. Alternatively, the generator can comprise an outer stator, which means that the stator is located radially outside of the rotor of the generator related to the rotation axis 79 of the rotor. In both cases the rotor and/or the stator can comprise the described single turn wave winding.

**Claims**

1. A generator (76) comprising at least one pole set representing one phase (1, 2, 3), each pole set comprising a number of poles (4), each pole (4) comprising a number of slots (19) and a number of stator teeth; each phase being insulated from neighbouring teeth by means of a slot insulation, **characterised in that** a number of conductors (8) are assembled such that each conductor (8) is turned about the poles (4) of a particular pole set such that only half a single turn (8a, 8b, 8c, 8d) is associated to each pole (4a, 4b, 4c, 4d), and each pole (4) comprises a slot insulation (61, 62, 63, 64) between the pole (4) and the associated conductors (8), wherein the slot insulation (61, 62, 63, 64) has a different thickness for at least two different poles (4) of the same pole set.

2. The generator (76) as claimed in claim 1, **characterised in that** the thickness of the slot insulation (61, 62, 63, 64) depends on the assembly of the conductors (8) in the particular slot (19) and/or the voltage difference between the particular pole (4) and the associated conductors (8).

3. The generator (76) as claimed in claim 1 or 2, **characterised in that**

each pole (4) comprises a lamination.

4. The generator (76) as claimed in any of the claims 1 to 3, **characterised in that** the generator (76) comprises a neutral conductor which is grounded and which has the same voltage as the pole (4), and the slot insulation (61, 62, 63, 64) follows an arithmetic sequence in the different poles (4) of each pole set from a maximum value $Ins_{\max}$ to a minimum value $Ins_{\min}$.

5. The generator (76) as claimed in claim 4, **characterised in that** the difference $\alpha$ of the slot insulation thickness (61, 62, 63, 64) between neighbouring poles (4) of a particular pole set is proportional to the voltage $V_{half.a.turn}$ in each half a single turn (8a, 8b, 8c, 8d) associated to the particular pole (4a, 4b, 4c, 4d).

6. The generator (76) as claimed in claim 4 or 5, **characterised in that** the difference $\alpha$ of the slot insulation thickness (61, 62, 63, 64) between neighbouring poles (4) of a particular pole set is $\alpha = \dfrac{Ins_{\max} - Ins_{\min}}{N_{half.a.turn} - 1}$, where $N_{half.a.turn}$ is the total number of half a single turns (8a, 8b, 8c, 8d) of each conductor (8).

7. The generator (76) as claimed in any of the claims 1 to 6, **characterised in that** the total number of half a single turns $N_{half.a.turn}$ of each conductor (8) is equal the number of poles (4) in the particular pole set.

8. The generator (76) as claimed in any of the claims 1 to 7, **characterised in that** the thickness $Ins_n$ of the slot insulation between the $n^{th}$ pole and the slot is $Ins_n = Ins_{\min} + (n-1)*\alpha$, wherein $\alpha$ is the difference of the slot insulation thickness between neighbouring poles (4) of a particular pole set, n is an natural number and $Ins_{\min}$ is a minimum slot insulation thickness value.

9. The generator (76) as claimed in any of the claims 1 to 8, **characterised in that** the generator (76) is a direct drive generator.

10. A wind turbine comprising a generator (76) as claimed in any of the claims 1 to 9.

11. A method for determining the thickness of the insulation between poles (4) and conductors (8) of a generator (76), comprising at least one pole set representing one phase (1, 2, 3) each pole set comprising a number of poles (4), the poles (4) being separated by slots (19), wherein a number of conductors (8) are assembled such that each conductor (8) is turned about the poles (4) of a particular pole set such that only half a single turn (8a, 8b, 8c, 8d) is associated to each pole (4a, 4b, 4c, 4d), and each pole (4a, 4b, 4c, 4d) comprises a slot insulation between the pole (4) and the associated conductors (8), wherein the thickness of the slot insulation is determined depending on the voltage in the conductors (8) in the particular slot.

**12.** The method as claimed in claim 11, wherein a maximum slot insulation thickness $Ins_{max}$ and a minimum slot insulation thickness $Ins_{min}$ is determined for each pole set.

**13.** The method as claimed in claim 11 or 12, wherein a linear proportion for calculating the difference in the thickness of the slot insulation between neighbouring poles (4) of the same pole set is determined.

**14.** The method as claimed in claim 13, wherein the linear proportion $\alpha$ is calculated by

$$\alpha = \frac{Ins_{max} - Ins_{min}}{N_{half.a.turn} - 1}$$, where $N_{half.a.turn}$ is the total number of half a single turns (8a, 8b, 8c, 8d) of each conductor (8).

**15.** The method as claimed in any of the claims 11 to 14, wherein the thickness $Ins_n$ of the slot insulation between the $n^{th}$ pole (4) and the associated conductors (8) is calculated by $Ins_n = Ins_{min} + (n\text{-}1)^*\alpha$, wherein $\alpha$ is the difference of the slot insulation thickness between neighbouring poles (4) of a particular pole set, n is an natural number and $Ins_{min}$ is a minimum slot insulation thickness value.

**FIG 1**

## FIG 2

| A | C' | B | A' | C | B' | A | C' | B | A' | C | B' |

## FIG 3

## FIG 4

## FIG 5

FIG 6

FIG 7

## EUROPEAN SEARCH REPORT

Europäisches
Patentamt
European
Patent Office
Office européen
des brevets

**Application Number**

EP 10 16 3314

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | US 2002/050395 A1 (KUSUMOTO KATSUHIKO [JP] ET AL) 2 May 2002 (2002-05-02)<br>* page 2 *<br>* paragraph [0068] - paragraph [0070] *<br>* paragraph [0075]; figures 1-12, 18-20 *<br>----- | 1-15 | INV.<br>H02K3/14<br>H02K3/28<br>H02K3/34<br><br>ADD.<br>H02K7/18<br>H02K3/40 |
| Y | JP 2006 060929 A (YASKAWA ELECTRIC CORP) 2 March 2006 (2006-03-02)<br>* abstract; figures 1, 2 *<br>----- | 1-15 | |
| A | EP 1 107 428 A2 (GEN ELECTRIC [US]) 13 June 2001 (2001-06-13)<br>* paragraph [0020] - paragraph [0021]; figure 2 *<br>----- | 1 | |
| A | WO 01/95345 A1 (ERICSSON TELEFON AB L M [SE]) 13 December 2001 (2001-12-13)<br>* abstract; figure 3 *<br>----- | 1 | |
| X | WO 2005/122367 A1 (KOEHLER GERARD [FR]) 22 December 2005 (2005-12-22)<br>* page 10, line 22 - page 12, line 14; figures 2, 3, 7-10 *<br>* page 14, line 4 - line 6; figure 16 *<br>----- | 1,8-12 | |

**TECHNICAL FIELDS SEARCHED (IPC)**

H02K

The present search report has been drawn up for all claims

| Place of search | Date of completion of the search | Examiner |
|---|---|---|
| The Hague | 14 January 2011 | Zanichelli, Franco |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

                   

& : member of the same patent family, corresponding
document

EPO FORM 1503 03.82 (P04C01)

**ANNEX TO THE EUROPEAN SEARCH REPORT
ON EUROPEAN PATENT APPLICATION NO.** EP 10 16 3314

This annex lists the patent family members relating to the patent documents cited in the above-mentioned European search report.
The members are as contained in the European Patent Office EDP file on
The European Patent Office is in no way liable for these particulars which are merely given for the purpose of information.

14-01-2011

| Patent document cited in search report | | | Publication date | Patent family member(s) | | | Publication date |
|---|---|---|---|---|---|---|---|
| US 2002050395 | A1 | | 02-05-2002 | DE | 10113831 | A1 | 07-02-2002 |
| | | | | FR | 2811487 | A1 | 11-01-2002 |
| | | | | JP | 2002027693 | A | 25-01-2002 |
| | | | | KR | 20020005955 | A | 18-01-2002 |
| JP 2006060929 | A | | 02-03-2006 | NONE | | | |
| EP 1107428 | A2 | | 13-06-2001 | JP | 2001211591 | A | 03-08-2001 |
| | | | | US | 6278217 | B1 | 21-08-2001 |
| | | | | US | 2002047458 | A1 | 25-04-2002 |
| WO 0195345 | A1 | | 13-12-2001 | AU | 6445901 | A | 17-12-2001 |
| | | | | SE | 516627 | C2 | 05-02-2002 |
| | | | | SE | 0002284 | A | 08-12-2001 |
| | | | | US | 2002017392 | A1 | 14-02-2002 |
| WO 2005122367 | A1 | | 22-12-2005 | EP | 1774640 | A1 | 18-04-2007 |
| | | | | FR | 2876231 | A1 | 07-04-2006 |
| | | | | JP | 2007536888 | T | 13-12-2007 |
| | | | | US | 2008258572 | A1 | 23-10-2008 |

EPO FORM P0459

For more details about this annex : see Official Journal of the European Patent Office, No. 12/82